(19) Europäisches Patentamt
European Patent Office
Office européen des brevets

(11) **EP 4 535 535 A1**

(12) **EUROPEAN PATENT APPLICATION**
published in accordance with Art. 153(4) EPC

(43) Date of publication:
**09.04.2025 Bulletin 2025/15**

(21) Application number: **23815138.5**

(22) Date of filing: **29.05.2023**

(51) International Patent Classification (IPC):
*H01M 50/244* (2021.01)    *H01M 50/242* (2021.01)
*H01M 50/231* (2021.01)    *H01M 50/218* (2021.01)
*H01M 50/249* (2021.01)

(52) Cooperative Patent Classification (CPC):
**H01M 50/218; H01M 50/231; H01M 50/242;**
**H01M 50/244; H01M 50/249;** Y02E 60/10

(86) International application number:
**PCT/CN2023/096806**

(87) International publication number:
**WO 2023/231957 (07.12.2023 Gazette 2023/49)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **31.05.2022  CN 202221380910 U**

(71) Applicant: **BYD Company Limited**
**Shenzhen, Guangdong 518118 (CN)**

(72) Inventors:
• **WAN, Long**
  **Shenzhen, Guangdong 518118 (CN)**

• **PENG, Qingbo**
  **Shenzhen, Guangdong 518118 (CN)**
• **TAN, Zhijia**
  **Shenzhen, Guangdong 518118 (CN)**
• **LEI, Song**
  **Shenzhen, Guangdong 518118 (CN)**
• **YANG, Shenglin**
  **Shenzhen, Guangdong 518118 (CN)**

(74) Representative: **Mathys & Squire**
**The Shard**
**32 London Bridge Street**
**London SE1 9SG (GB)**

(54) **BATTERY PROTECTION BOTTOM PLATE, COMPOSITE PROTECTION STRUCTURE FOR BATTERY PACK, AND VEHICLE**

(57)    A battery protection bottom plate, a composite protection structure for a battery pack, and a vehicle. The battery protection bottom plate comprises an upper fiber-reinforced resin layer, a metal plate and a lower fiber-reinforced resin layer, the metal plate being located between the upper fiber-reinforced resin layer and the lower fiber-reinforced resin layer. The upper fiber-reinforced resin layer and the lower fiber-reinforced resin layer meet the following conditions: $0.4 \leq d_2/d_1 \leq 2$, wherein $d_1$ is the thickness of the lower fiber-reinforced resin layer measured in mm, and $d_2$ is the thickness of the upper fiber-reinforced resin layer measured in mm.

FIG. 1

EP 4 535 535 A1

**Description**

CROSS-REFERENCE TO RELATED APPLICATIONS

The present disclosure claims priority to and benefits of Chinese Patent Application No. 202221380910.3, filed on May 31st, 2022. The entire content of the above-referenced application is incorporated herein by reference.

FIELD

The present disclosure relates to the field of vehicle battery technologies, and specifically, to a battery protection bottom plate, a composite protection structure for a battery pack, and a vehicle.

BACKGROUND

With rapid development of electric vehicles, safety requirements of people for the electric vehicles are increasingly high. Because power battery packs are used as power sources of the electric vehicles, safety of the power battery packs is very important. In an electric vehicle, a battery pack is generally located in a lower part of a chassis of the vehicle, and is connected to the chassis through bolts. A lower surface of the battery pack is exposed. Therefore, during daily driving of the vehicle, the bottom of the battery pack is easily bumped, causing breakage of a box and failure of protection. In addition, during the driving, splashing of pebbles at the bottom also causes impact to the battery pack. To face complex operating situations, a protection plate is usually arranged at the bottom of the battery pack, to protect the bottom of the battery pack by using the protection plate. Due to exposure and long-term impact on the existing protection plate, a protective coating of the protection plate is prone to delamination and hollowing, and a hollow part causes the protective coating to be easily broken, resulting in corrosion of the protective coating, and affecting mechanical strength and an impact resistance capability of the protection plate.

SUMMARY

In view of the problems that in an existing battery protection plate, a protective coating suffers from hollowing under impact and corrosion resistance performance is insufficient, the present disclosure provides a battery protection bottom plate and a composite protection structure for a battery pack.

A technical solution used by the present disclosure to resolve the foregoing technical problems is as follows:

According to an aspect, the present disclosure provides a battery protection bottom plate. The battery protection bottom plate includes an upper fiber-reinforced resin layer, a metal plate, and a lower fiber-reinforced resin layer. The metal plate is located between the upper fiber-reinforced resin layer and the lower fiber-reinforced resin layer. The upper fiber-reinforced resin layer and the lower fiber-reinforced resin layer meet the following condition:

$$0.4 \leq d_2/d_1 \leq 2.$$

$d_1$ is a thickness of the lower fiber-reinforced resin layer measured in mm. $d_2$ is a thickness of the upper fiber-reinforced resin layer measured in mm.

In some embodiments, the upper fiber-reinforced resin layer and the lower fiber-reinforced resin layer meet the following condition: $0.5 \leq d_2/d_1 \leq 1.7$.

In some embodiments, the thickness $d_1$ of the lower fiber-reinforced resin layer ranges from 0.6 mm to 2.0 mm.

In some embodiments, the thickness $d_2$ of the upper fiber-reinforced resin layer ranges from 0.4 mm to 1.6 mm.

In some embodiments, the battery protection bottom plate further includes a fiber-reinforced resin frame. The metal plate and the fiber-reinforced resin frame are located between the upper fiber-reinforced resin layer and the lower fiber-reinforced resin layer. The metal plate is located inside the fiber-reinforced resin frame. A top surface of the fiber-reinforced resin frame is integrally connected to the upper fiber-reinforced resin layer. A bottom surface of the fiber-reinforced resin frame is integrally connected to the lower fiber-reinforced resin layer.

In some embodiments, a number of mounting holes are arranged at intervals at a position at which the upper fiber-reinforced resin layer, the fiber-reinforced resin frame, and the lower fiber-reinforced resin layer overlap.

In some embodiments, the upper fiber-reinforced resin layer, the fiber-reinforced resin frame, and the lower fiber-reinforced resin layer each are independently selected from a glass fiber-reinforced polyamide resin member, a glass fiber-reinforced polypropylene resin member, a glass fiber-reinforced polyethylene resin member, a glass fiber-reinforced polycarbonate resin member, or a glass fiber-reinforced polystyrene resin member.

In some embodiments, the upper fiber-reinforced resin layer includes a number of layers of first fiber-reinforced prepregs stacked on each other. The fiber-reinforced resin frame includes a number of layers of second fiber-reinforced prepregs stacked on each other. The lower fiber-reinforced resin layer includes a number of layers of third fiber-reinforced prepregs stacked on each other.

In some embodiments, a thickness of the metal plate ranges from 0.7 mm to 1.5 mm.

In some embodiments, the metal plate is a steel plate. An outer surface of the steel plate is provided with a zinc layer, a zinc-iron alloy layer, or an electrophoretic paint protective layer.

According to another aspect, the present disclosure provides a composite protection structure for a battery pack. The composite protection structure for a battery pack includes a battery pack and the foregoing battery protection bottom plate. The battery protection bottom plate is arranged below the battery pack. A buffer region is formed between the battery pack and the battery protection bottom plate.

In some embodiments, the buffer region is filled with a buffer layer. The buffer layer is selected from a honeycomb material or a rigid foam material.

According to another aspect, the present disclosure provides a vehicle. The vehicle includes the foregoing battery protection bottom plate or the foregoing composite protection structure for a battery pack.

According to the battery protection bottom plate provided in the present disclosure, the upper fiber-reinforced resin layer and the lower fiber-reinforced resin layer are composited on a front surface and a back surface of the metal plate. In this way, the upper fiber-reinforced resin layer and the lower fiber-reinforced resin layer can improve corrosion resistance performance of the metal plate, and the lower fiber-reinforced resin layer can also resist impact of pebbles or the like on the bottom of the battery protection bottom plate, thereby avoiding corrosion of an impacted part. In addition, after the upper fiber-reinforced resin layer and the lower fiber-reinforced resin layer are composited on the metal plate, rigidity and strength of the metal plate are effectively improved, so that the metal plate has a high impact resistance capability.

Further, the inventor finds through a large quantity of experiments that, a relationship between the thickness $d_1$ of the lower fiber-reinforced resin layer and the thickness $d_2$ of the upper fiber-reinforced resin layer affects uniformity of upper and lower temperatures of the battery protection bottom plate during hot pressing, and then affects consistency of bonding the lower fiber-reinforced resin layer and the upper fiber-reinforced resin layer to the metal plate. When the thickness $d_1$ of the lower fiber-reinforced resin layer and the thickness $d_2$ of the upper fiber-reinforced resin layer meet the condition: $0.4 \leq d_2/d_1 \leq 2$, performance of bonding the lower fiber-reinforced resin layer and the upper fiber-reinforced resin layer to the metal plate can be better ensured, thereby avoiding delamination and hollowing of the battery protection bottom plate under long-term impact, and ensuring protection for corrosion resistance of the metal plate. It is inferred that, when the thickness $d_1$ of the lower fiber-reinforced resin layer and the thickness $d_2$ of the upper fiber-reinforced resin layer meet the foregoing condition, uniformity of temperatures of the lower fiber-reinforced resin layer and the upper fiber-reinforced resin layer during the hot pressing can be improved. Therefore, the consistency of the performance of bonding the lower fiber-reinforced resin layer and the upper fiber-reinforced resin layer to the metal plate is effectively improved, and an overall bonding effect and an impact resistance effect are improved.

## BRIEF DESCRIPTION OF THE DRAWINGS

FIG. 1 is a schematic structural diagram of a battery protection bottom plate according to an embodiment of the present disclosure;

FIG. 2 is a schematic structural diagram of different first fiber-reinforced prepreg tapes in an upper fib er-reinforced resin layer according to an embodiment of the present disclosure;

FIG. 3 is a schematic structural diagram of different first fiber woven cloth-reinforced prepregs in an upper fiber-reinforced resin layer according to an embodiment of the present disclosure;

FIG. 4 is a schematic structural diagram of a composite protection structure for a battery pack according to an embodiment of the present disclosure;

FIG. 5 is a schematic enlarged view of a position A in FIG. 4;

FIG. 6 is a cross-sectional schematic view of the bottom of a composite protection structure for a battery pack according to an embodiment of the present disclosure;

FIG. 7 is a cross-sectional schematic view of the bottom of a composite protection structure for a battery pack according to another embodiment of the present disclosure;

FIG. 8 is a cross-sectional schematic view of the bottom of a composite protection structure for a battery pack according to another embodiment of the present disclosure; and

FIG. 9 is a schematic diagram of a vehicle according to an embodiment of the present disclosure.

In the drawings:

100: vehicle; 10: composite protection structure for a battery;

1: battery protection bottom plate; 11: upper fiber-reinforced resin layer; 110: first fiber-reinforced prepreg; 111: first fiber-reinforced prepreg tape; 112: first fiber woven cloth-reinforced prepreg; 12: metal plate; 13: fiber-reinforced resin frame; 14: lower fiber-reinforced resin layer, 15: mounting hole; 2: buffer layer; 3: battery pack; 31: tray; and 4: buffer region.

## DETAILED DESCRIPTION

To make technical problems resolved by the present disclosure, technical solutions, and beneficial effects more comprehensible, the following further describes the present disclosure in detail with reference to the drawings and embodiments. It should be understood that the specific embodiments described herein are only for explaining the present disclosure but are not to limit the present disclosure.

In the description of the present disclosure, it should be understood that orientation or position relationships indicated by the terms such as "upper", "lower", "top", "bottom", "inner", and "outer" are based on orientation or position relationships shown in the drawings, and are used only for ease and brevity of illustration and description of the present disclosure, rather than indicating or implying that the mentioned apparatus or component needs to have a particular orientation or needs to be constructed and operated in a particular orientation. Therefore, such terms should not be construed as limiting of the present disclosure. In the description of the present disclosure, unless otherwise stated, "a plurality of/a number of" means two or more than two.

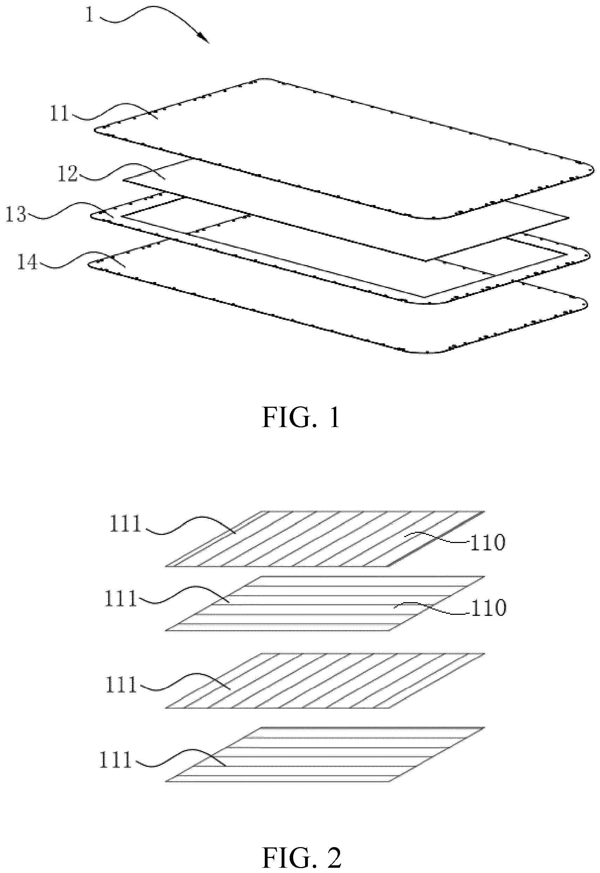

Referring to FIG. 1, an embodiment of the present disclosure provides a battery protection bottom plate 1. The battery protection bottom plate 1 includes an upper fiber-reinforced resin layer 11, a metal plate 12, and a lower fiber-reinforced resin layer 14. The metal plate 12 is located between the upper fiber-reinforced resin layer 11 and the lower fiber-reinforced resin layer 14. The upper fiber-reinforced resin layer 11 and the lower fiber-reinforced resin layer 14 meet the following condition:

$$0.4 \leq d_2/d_1 \leq 2.$$

$d_1$ is a thickness of the lower fiber-reinforced resin layer 14 measured in mm. $d_2$ is a thickness of the upper fiber-reinforced resin layer 11 measured in mm. For example, $d_2/d_1$ may be 0.4, 0.6, 0.9, 1, 1.4, 1.7, 2, or the like.

The upper fiber-reinforced resin layer 11 and the lower fiber-reinforced resin layer 14 are composited on a front surface and a back surface of the metal plate 12. In this way, the upper fiber-reinforced resin layer 11 and the lower fiber-reinforced resin layer 14 can improve corrosion resistance performance of the metal plate 12, and the lower fiber-reinforced resin layer 14 can also resist impact of pebbles or the like on the bottom of the battery protection bottom plate 1, thereby avoiding corrosion of an impacted part. In addition, after the upper fiber-reinforced resin layer 11 and the lower fiber-reinforced resin layer 14 are composited on the metal plate 12, rigidity and strength of the metal plate 12 are effectively improved, so that the metal plate 12 has a high impact resistance capability.

Further, the inventor finds through a large quantity of experiments that, a relationship between the thickness $d_1$ of the lower fiber-reinforced resin layer 14 and the thickness $d_2$ of the upper fiber-reinforced resin layer 11 affects uniformity of upper and lower temperatures of the battery protection bottom plate 1 during hot pressing, and then affects consistency of bonding the lower fiber-reinforced resin layer 14 and the upper fiber-reinforced resin layer 11 to the metal plate 12. When the thickness $d_1$ of the lower fiber-reinforced resin layer 14 and the thickness $d_2$ of the upper fiber-reinforced resin layer 11 meet the condition: $0.4 \leq d_2/d_1 \leq 2$, performance of bonding the lower fiber-reinforced resin layer 14 and the upper fiber-reinforced resin layer 11 to the metal plate 12 can be better ensured, thereby avoiding delamination and hollowing of the battery protection bottom plate 1 under long-term impact, and ensuring protection for corrosion resistance of the metal plate. It is inferred that, when the thickness $d_1$ of the lower fiber-reinforced resin layer 14 and the thickness $d_2$ of the upper fiber-reinforced resin layer 11 meet the foregoing condition, uniformity of temperatures of the lower fiber-reinforced resin layer 14 and the upper fiber-reinforced resin layer 11 during the hot pressing can be improved. Therefore, the consistency of the performance of bonding the lower fiber-reinforced resin layer 14 and the upper fiber-reinforced resin layer 11 to the metal plate 12 is effectively improved, and an overall bonding effect and an impact resistance effect are improved.

In some embodiments, the upper fiber-reinforced resin layer 11 and the lower fiber-reinforced resin layer 14 meet the following condition: $0.5 \leq d_2/d_1 \leq 1.7$. For example, $d_2/d_1$ may be 0.5, 0.8, 1.1, 1.3, 1.5, 1.7, or the like.

Through limitation of the foregoing relational expression, impact of the thickness of the upper fiber-reinforced resin layer 11 and the thickness of the lower fiber-reinforced resin layer 14 on impact resistance performance of a battery pack 3 can be comprehended, to facilitate prolonging the service life of the battery protection bottom plate 1.

In some embodiments, the thickness $d_1$ of the lower fiber-reinforced resin layer 14 ranges from 0.6 mm to 2.0 mm.

Specifically, the thickness $d_1$ of the lower fiber-reinforced resin layer may be 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.8 mm, 2.0 mm, or the like.

The lower fiber-reinforced resin layer 14 is a surface layer of the battery protection bottom plate 1 that is in direct contact with an external impact object. The thickness $d_1$ of the lower fiber-reinforced resin layer 14 is related to an effect that the metal plate 12 resists corrosion by external air and moisture, and also affects strength of bonding the lower fiber-reinforced resin layer 14 to the metal plate 12 and overall strength after the lower fiber-reinforced resin layer 14 is composited on the metal plate 12. When the thickness $d_1$ of the lower fiber-reinforced resin layer 14 falls within the foregoing range, falling off on a surface of the metal plate 12 can be avoided under impact of high energy, and an effect of enhancing the corrosion resistance and the strength of the metal plate 12 can be effectively maintained.

In some embodiments, the thickness $d_2$ of the upper fiber-reinforced resin layer 11 ranges from 0.4 mm to 1.6 mm.

Specifically, the thickness $d_2$ of the upper fiber-reinforced resin layer 11 may be 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, or the like.

The thickness of the upper fiber-reinforced resin layer 11 mainly affects performance of the upper fiber-reinforced resin layer 11 against moisture penetration and strength of bonding the upper fiber-reinforced resin layer 11 to the metal plate 12. When the thickness $d_2$ of the upper fiber-reinforced resin layer 11 falls within the foregoing range, performance of protecting the metal plate 12 can be effectively improved, and the strength of bonding the upper fiber-reinforced resin layer 11 to the metal plate 12 can be improved.

In some embodiments, a thickness of the metal plate 12 ranges from 0.7 mm to 1.5 mm.

Specifically, the thickness of the metal plate 12 may be 0.7 mm, 0.8 mm, 0.9 mm, 1.0 mm, 1.1 mm, 1.2 mm, 1.3 mm, 1.4 mm, 1.5 mm, or the like.

The thickness of the metal plate 12 affects overall mechanical strength of the battery protection bottom plate 1. When the thickness of the metal plate 12 falls within the foregoing range, the overall mechanical strength of the battery protection bottom plate 1 can be ensured, costs can be effectively controlled, a distance from the ground can be ensured, and lightweight control of a vehicle can also be facilitated.

As shown in FIG. 1, in some embodiments, the battery protection bottom plate 1 further includes a fiber-reinforced resin frame 13. The metal plate 12 and the fiber-reinforced resin frame 13 are located between the upper fiber-reinforced resin layer 11 and the lower fiber-reinforced resin layer 14. The metal plate 12 is located inside the fiber-reinforced resin frame 13. A top surface of the fiber-reinforced resin frame 13 is integrally connected to the upper fiber-reinforced resin layer 11. A bottom surface of the fiber-reinforced resin frame 13 is integrally connected to the lower fiber-reinforced resin layer 14.

The fiber-reinforced resin frame 13 is arranged on a periphery of the metal plate 12, to be used as a transition member for connecting frame positions of the upper fiber-reinforced resin layer 11 and the lower fiber-reinforced resin layer 14. In this way, impact of the thickness of the metal plate 12 on connection of frames of the upper fiber-reinforced resin layer 11 and the lower fiber-reinforced resin layer 14 can be effectively offset, and strength of a frame position of the battery protection bottom plate 1 can be ensured, so that a frame position of the battery protection bottom plate 1 can be used as a mounting structure of the battery protection bottom plate 1 on the battery, and an impact resistance capability of the battery protection bottom plate 1 can be improved.

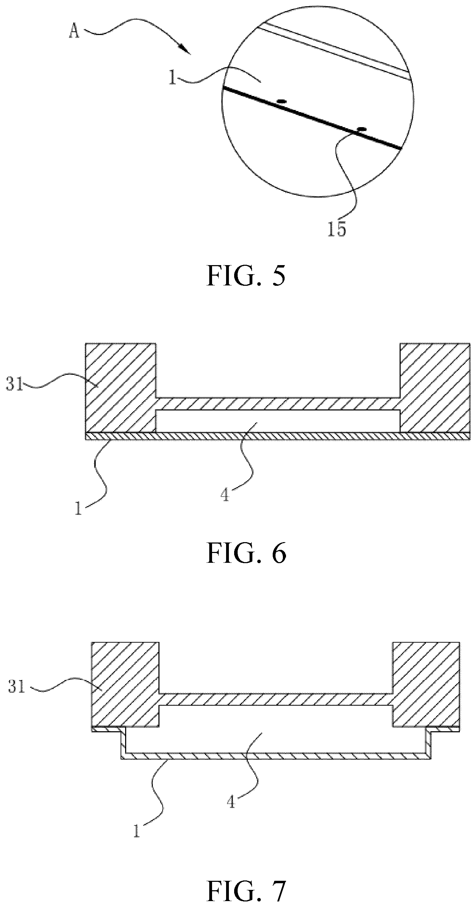

As shown in FIG. 5, in some embodiments, a number of mounting holes 15 are arranged at intervals at a position at which the upper fiber-reinforced resin layer 11, the fiber-reinforced resin frame 13, and the lower fiber-reinforced resin layer 14 overlap.

Specifically, the position at which the upper fiber-reinforced resin layer 11, the fiber-reinforced resin frame 13, and the fiber-reinforced resin layer 14 overlap is the frame position of the battery protection bottom plate 1. The number of mounting holes 15 are arranged at intervals around the frame position of the battery protection bottom plate 1. The mounting holes 15 sequentially penetrate through the upper fiber-reinforced resin layer 11, the fiber-reinforced resin frame 13, and the fiber-reinforced resin layer 14.

The mounting holes 15 are used for mounting and fastening of the battery protection bottom plate 1 on the bottom of the battery pack 3, and the mounting holes 15 are arranged at the position at which the upper fiber-reinforced resin layer 11, the fiber-reinforced resin frame 13, and the lower fiber-reinforced resin layer 14 overlap. In this way, the mounting holes 15 can be prevented from penetrating through the metal plate 12, and the metal plate 12 can be prevented from being exposed at the mounting holes 15, thereby avoiding corrosion. In addition, the fiber-reinforced resin frame 13 can improve an overall thickness and tensile shear strength of the mounting position, thereby having sufficient mounting stability.

The number of mounting holes 15 are arranged around the periphery of the metal plate 12, to evenly disperse top gravity and bottom impact force on the metal plate 12.

Specifically, during mounting, a connecting member is arranged to pass through the mounting hole 15 to fix the battery protection bottom plate 1 to the bottom of the battery pack 3. The connecting member is a rivet, a screw, or a bolt.

In different embodiments, resin of the upper fiber-reinforced resin layer 11, the fiber-reinforced resin frame 13, and the lower fiber-reinforced resin layer 14 are each independently selected from a thermoset material and/or a thermoplastic material. Examples may include, but are not limited to, epoxy resin, phenolic plastics, phenols, cyanates, imides (for example, polyimide, bismaleimide (BMI), and polyetherimide), polypropylenes, polyesters, benzoxazines, polybenzimidazoles, polybenzothiazoles, polyamides, polyamideimides, polysulfones, polyethersulfones, polycarbonates, polyethylene terephthalates, polyetherketones (for example, polyetherketone (PEK), polyetheretherketone (PEEK), and polyetherketoneketone (PEKK)), and a combination thereof.

In different embodiments, fibers of the upper fiber-reinforced resin layer 11, the fiber-reinforced resin frame 13, and the lower fiber-reinforced resin layer 14 are each independently selected from a glass fiber, an aramid fiber, a carbon fiber, a graphite fiber, a boron fiber, an aromatic polyamide fiber, or a mixture thereof.

The fibers of the upper fiber-reinforced resin layer 11, the fiber-reinforced resin frame 13, and the lower fiber-reinforced resin layer 14 may be embedded in resin in a form of short-cut fibers, long-cutfibers, non-woven cloth, unidirectional reinforced fiber substrates, woven cloth, or the like.

In some embodiments, the upper fiber-reinforced resin layer 11, the fiber-reinforced resin frame 13, and the lower fiber-reinforced resin layer 14 each are independently selected from a glass fiber-reinforced polyamide resin member, a glass fiber-reinforced polypropylene resin member, a glass fiber-reinforced polyethylene resin member, a glass fiber-reinforced polycarbonate resin member, or a glass fiber-reinforced polystyrene resin member.

In some embodiments, a same resin material is selected for the upper fiber-reinforced resin layer 11, the fiber-reinforced resin frame 13, and the lower fiber-reinforced resin layer 14. The same resin material can ensure affinity of materials between different layers, thereby ensuring a degree of bonding between different layers and improving the overall strength.

In some embodiments, the upper fiber-reinforced resin layer 11 includes a number of layers of first fiber-reinforced prepregs 110 stacked on each other. The fiber-reinforced resin frame 13 includes a number of layers of second fiber-reinforced prepregs stacked on each other. The lower fiber-reinforced resin layer 14 includes a number of layers of third fiber-reinforced prepregs stacked on each other.

As shown in FIG. 2, the upper fiber-reinforced resin layer 11 includes a number of layers of first fiber-reinforced prepreg tapes 111 stacked on each other. Arrangement directions of fibers of two adjacent layers of first fiber-reinforced prepreg tapes 111 are laid at substantially 90° in an interlaced form. An allowable deviation range of a laying angle of two adjacent layers of first fiber-reinforced prepreg tapes 111 is ±20°.

Fibers in the first fiber-reinforced prepregtape 111 are unidirectionally arranged. When subjected to tensile force along an extension direction of the fibers, the fibers in the first fiber-reinforced prepreg tape 111 can effectively bear the tensile force. Arrangement directions of fibers of adjacent first fiber-reinforced prepreg tapes 111 are laid at substantially 90° in an interlaced form, so that uniformity of force subjected to the upper fiber-reinforced resin layer 11 in all directions can be improved.

The fiber-reinforced resin frame 13 includes a number of layers of second fiber-reinforced prepreg tapes stacked on each other. Fibers in the second fiber-reinforced prepreg tape are unidirectionally arranged. Arrangement directions of fibers of two adjacent layers of second fiber-reinforced prepreg tapes are laid at substantially 90° in an interlaced form. An allowable deviation range of a laying angle of two adjacent layers of second fiber-reinforced prepreg tapes is ±20°.

The lower fiber-reinforced resin layer 14 includes a number of layers of third fiber-reinforced prepreg tapes stacked on each other. Fibers in the third fiber-reinforced prepreg tape are unidirectionally arranged. Arrangement directions of fibers of two adjacent layers of third fiber-reinforced prepreg tapes are laid at substantially 90° in an interlaced form. An allowable deviation range of a laying angle of two adjacent layers of the third fiber-reinforced prepreg tapes is ±20°.

Fiber arrangement of the fiber-reinforced resin frame and fiber arrangement of the lower fiber-reinforced resin layer are similar to that of the upper fiber-reinforced resin layer. Details are not described again.

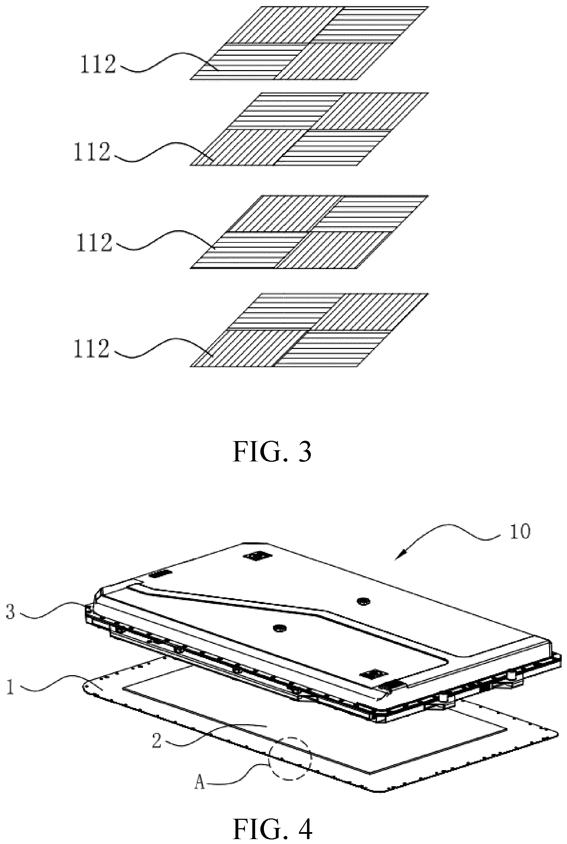

As shown in FIG. 3, in another embodiment, the upper fiber-reinforced resin layer 11 includes a number of layers of first fiber woven cloth-reinforced prepregs 112 stacked on each other. Fibers in the first fiber woven cloth-reinforced prepreg 112 form woven cloth in an interlaced form.

The fiber-reinforced resin frame 13 includes a number of layers of second fiber woven cloth-reinforced prepregs stacked on each other. Fibers in the second fiber woven cloth-reinforced prepreg form woven cloth in an interlaced form.

The lower fiber-reinforced resin layer 14 includes a number of layers of third fiber woven cloth-reinforced prepregs stacked on each other. Fibers in the third fiber woven cloth-reinforced prepreg form woven cloth in an interlaced form.

In some embodiments, the metal plate 12 is selected from iron and an alloy thereof, aluminum and an alloy thereof, magnesium and an alloy thereof, copper and an alloy thereof, titanium and an alloy thereof, or nickel and an alloy thereof.

In some embodiments, the metal plate 12 is a steel plate. An outer surface of the steel plate is provided with a zinc layer, a zinc-iron alloy layer, or an electrophoretic paint protective layer.

Compared with other metal materials, the steel plate is used as the metal plate 12, to have good tensile strength and elongation, so that a requirement for impact resistance can be met, and protection for the battery pack 3 can be improved.

The outer surface of the steel plate is provided with the zinc layer, the zinc-iron alloy layer, or the electrophoretic paint protective layer, to improve corrosion resistance performance of the steel plate. When breakage occurs on the upperfiber-reinforced resin layer 11 or the fiber-reinforced resin layer 14, a galvanic effect formed between the zinc layer or the zinc-iron alloy layer and the steel plate causes the zinc layer or the zinc-iron alloy layer to be corroded prior to the steel plate, thereby protecting the steel plate; and the electrophoretic paint protective layer has good adhesion, thereby effectively isolating the steel plate from an external environment.

As shown in FIG. 4, another embodiment of the present disclosure provides a composite protection structure 10 for a battery pack. The composite protection structure 10 for a battery pack includes a battery pack 3 and the foregoing battery protection bottom plate 1. The battery protection bottom plate 1 is arranged below the battery pack3. A buffer region 4 is formed between the battery pack 3 and the battery protection bottom plate 1.

Because the composite protection structure 10 for a battery pack uses the foregoing battery protection bottom plate 1, protective strength of the battery protection bottom plate 1 and stable connection of the battery protection bottom plate 1 to the battery pack 3 are effectively ensured while a low overall thickness is ensured.

In some embodiments, the battery pack 3 includes a tray 31 and a battery arranged on the tray 31.

In different embodiments, the buffer region 4 may be arranged between the battery pack 3 and the battery protection bottom plate 1 in different manners.

As shown in FIG. 6, in an embodiment, a groove is arranged inward on a bottom surface of the tray 31, to form the buffer region 4. The battery protection bottom plate 1 is in a flat plate shape. The battery protection bottom plate 1 covers the buffer region 4.

As shown in FIG. 7, in an embodiment, a frame position of the battery protection bottom plate 1 is connected to a bottom surface of the tray 31. A groove is arranged inward on the bottom surface of the tray 31. The battery protection bottom plate 1 protrudes along a direction facing away from the tray 31, to form the buffer region 4 between the tray 31 and the battery protection bottom plate 1.

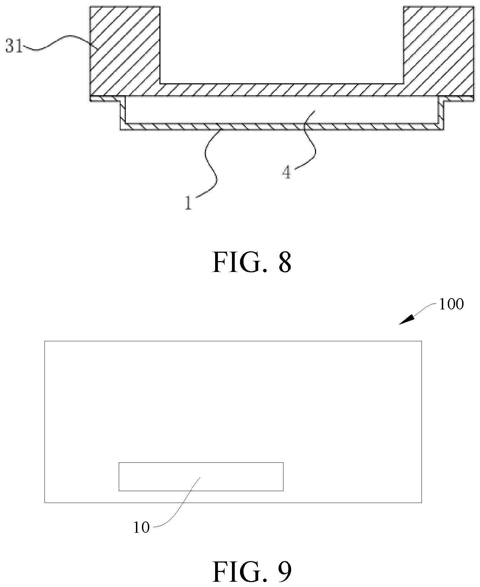

As shown in FIG. 8, in an embodiment, a frame position of the battery protection bottom plate 1 is connected to a bottom surface of the tray 31. The bottom surface of the tray 31 is a plane. The battery protection bottom plate 1 protrudes along a direction facing away from the tray 31, to form the buffer region 4 between the tray 31 and the battery protection bottom plate 1.

In some embodiments, the buffer region 4 is filled with a buffer layer 2. The buffer layer 2 is selected from a honeycomb material or a rigid foam material.

The honeycomb material or the rigid foam material can absorb a collapse deformation space of the battery protection bottom plate 1 under external strong impact, and buffer and absorb a part of energy of the external strong impact, to prevent compression and deformation of the battery protection bottom plate 1 from impacting an internal core of the battery pack 3, thereby further protecting the battery pack 3.

In some embodiments, the honeycomb material is selected from a PP honeycomb material or an aluminum honeycomb material. The rigid foam material is selected from a PU rigid foam material, a PET rigid foam material, a PMI rigid foam material, a PVC rigid foam material, a PET rigid foam material, an MPP rigid foam material, a PLArigid foam material, a PI rigid foam material, or an EPTU rigid foam material.

Another embodiment of the present disclosure provides a vehicle 100. As shown in FIG. 9, the vehicle 100 includes the foregoing battery protection bottom plate 1 or the foregoing composite protection structure 10 for a battery pack.

The present disclosure is further described below through embodiments.

Table 1

|  | Thickness $d_1$/mm of a lower fiber-reinforced resin layer | Thickness $d_2$/mm of an upper fiber-reinforced resin layer | $d_2/d_1$ |
|---|---|---|---|
| Embodiment 1 | 1 | 1.6 | 1.6 |
| Embodiment 2 | 1 | 1 | 1.0 |
| Embodiment 3 | 2 | 1.6 | 0.8 |
| Embodiment 4 | 2 | 1.0 | 0.5 |
| Embodiment 5 | 0.6 | 0.8 | 1.33 |
| Embodiment 6 | 0.6 | 1 | 1.67 |
| Embodiment 7 | 0.6 | 1.2 | 2.0 |
| Embodiment 8 | 2.2 | 1 | 0.45 |
| Embodiment 9 | 1 | 1.8 | 1.8 |
| Embodiment 10 | 1 | 0.4 | 0.4 |

(continued)

|  | Thickness $d_1$/mm of a lower fiber-reinforced resin layer | Thickness $d_2$/mm of an upper fiber-reinforced resin layer | $d_2/d_1$ |
|---|---|---|---|
| Comparative example 1 | 2 | 0.6 | 0.3 |
| Comparative example 2 | 0.6 | 1.6 | 2.67 |

Embodiment 1

This embodiment is used to describe that a composite protection structure for a battery pack disclosed in the present disclosure includes a battery pack, a buffer layer, and a battery protection bottom plate. The battery protection bottom plate includes a metal plate, an upper fiber-reinforced resin layer, a fiber-reinforced resin frame, and a lower fiber-reinforced resin layer. The metal plate is located between the upper fiber-reinforced resin layer and the lower fiber-reinforced resin layer. The metal plate is located inside the fiber-reinforced resin frame. A top surface of the fiber-reinforced resin frame is integrally connected to the upper fiber-reinforced resin layer. A bottom surface of the fiber-reinforced resin frame is integrally connected to the lower fiber-reinforced resin layer. The battery protection bottom plate is arranged below the battery pack. A buffer region is formed between the battery pack and the battery protection bottom plate. The buffer region is filled with the buffer layer. A frame of the battery protection bottom plate is mounted at a bottom frame position of the battery pack through rivets.

A thickness $d_1$ of the lower fiber-reinforced resin layer is 1.0 mm. A thickness of the metal plate is 0.8 mm. A thickness $d_2$ of the upper fiber-reinforced resin layer is 1.6 mm.

Embodiments 2 to 10

Embodiments 2 to 10 are used to describe that a composite protection structure for a battery pack disclosed in the present disclosure includes most of structures in Embodiment 1. Differences are as follows:

Upper fiber-reinforced resin layers and lower fiber-reinforced resin layers provided in Embodiments 2 to 10 in Table 1 are used.

Comparative examples 1 and 2

Comparative examples 1 and 2 are used to describe, in a comparison manner, that a composite protection structure for a battery pack disclosed in the present disclosure includes most of structures in Embodiment 1. Differences are as follows:

Upper fiber-reinforced resin layers and lower fiber-reinforced resin layers provided in Comparative examples 1 and 2 in Table 1 are used.

Performance testing

Performance testing is performed on the composite protection structures for a battery pack provided in the foregoing embodiments and comparative examples:

A sphere was used as an impact head to impact the battery protection bottom plate of the composite protection structure for a battery pack, to simulate an operating situation in which the bottom of an entire vehicle was hit by a foreign object. A diameter of the sphere was 25 mm, a weight of the sphere was 10 kg, impact energy was 300 J, and an impact speed was 8.5 m/s. A center point of the battery protection bottom plate and four points on a periphery of the center point were selected as impact points to perform five times of impacting.

A diameter of a pulverized region after the battery protection bottom plate was impacted was measured by using a vernier caliper. A single impact point was measured three times, to determine an average value. An impact point with a largest diameter of a pulverized region was selected and recorded as the diameter of the pulverized region of the battery protection bottom plate. Generally, the diameter of the pulverized region is required to be not greater than 10 mm.

A diameter of a delaminated hollow part after the battery protection bottom plate was impacted was measured by using the vernier caliper. A single impact point was measured three times, to determine an average value. An impact point with a largest diameter of a hollow part was selected and recorded as a hollow size of the battery protection bottom plate. A degree of hollowing was determined according to the following grading standards:

R1: no delamination.
R2: slight delamination, with a hollow size less than 4 mm in diameter.

R3: slight delamination, with a hollow size less than 8 mm in diameter.
R4: delamination, with a hollow size greater than 8 mm in diameter.

Obtained testing results are listed in Table 2.

Table 2

| Sample | Diameter/mm of a pulverized region after impact | Degree of hollowing |
|---|---|---|
| Embodiment 1 | 3 | R1 |
| Embodiment 2 | 4 | R1 |
| Embodiment 3 | 6 | R1 |
| Embodiment 4 | 5 | R1 |
| Embodiment 5 | 7 | R1 |
| Embodiment 6 | 8 | R1 |
| Embodiment 7 | 6 | R3 |
| Embodiment 8 | 5 | R3 |
| Embodiment 9 | 2 | R3 |
| Embodiment 10 | 9 | R1 |
| Comparative example 1 | 12 | R4 |
| Comparative example 2 | 14 | R4 |

It can be seen from the test results in Table 2 that, a relationship between the thickness of the upper fiber-reinforced resin layer and the thickness of the lower fiber-reinforced resin layer is limited, so that strength of bonding the upper fiber-reinforced resin layer and the lower fiber-reinforced resin layer to the metal plate can be effectively improved, thereby avoiding delamination caused by impact.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A battery protection bottom plate (1), comprising an upper fiber-reinforced resin layer (11), a metal plate (12), and a lower fiber-reinforced resin layer (14), the metal plate (12) being located between the upper fiber-reinforced resin layer (11) and the lower fiber-reinforced resin layer (14); and the upper fiber-reinforced resin layer (11) and the lower fiber-reinforced resin layer (14) meeting the following condition:

$$0.4 \leq d_2/d_1 \leq 2$$

wherein $d_1$ is a thickness of the lower fiber-reinforced resin layer (14) measured in mm; and $d_2$ is a thickness of the upper fiber-reinforced resin layer (11) measured in mm.

2. The battery protection bottom plate (1) according to claim 1, wherein the upper fiber-reinforced resin layer (11) and the lower fiber-reinforced resin layer (14) meet the following condition: $0.5 \leq d_2/d_1 \leq 1.7$.

3. The battery protection bottom plate (1) according to claim 1 or 2, wherein the thickness $d_1$ of the lower fiber-reinforced resin layer (14) ranges from 0.6 mm to 2.0 mm.

4. The battery protection bottom plate (1) according to any one of claims 1 to 3, wherein the thickness $d_2$ of the upper fiber-reinforced resin layer (11) ranges from 0.4 mm to 1.6 mm.

5. The battery protection bottom plate (1) according to any one of claims 1 to 4, wherein the battery protection bottom plate (1) further comprises a fiber-reinforced resin frame (13), the metal plate (12) and the fiber-reinforced resin frame (13) are located between the upper fiber-reinforced resin layer (11) and the lower fiber-reinforced resin layer (14), the metal plate (12) is located inside the fiber-reinforced resin frame (13), a top surface of the fiber-reinforced resin frame (13) is integrally connected to the upper fiber-reinforced resin layer (11), and a bottom surface of the fiber-reinforced resin frame (13) is integrally connected to the lower fiber-reinforced resin layer (14).

6. The battery protection bottom plate (1) according to claim 5, wherein a plurality of mounting holes (15) are arranged at intervals at a position at which the upper fiber-reinforced resin layer (11), the fiber-reinforced resin frame (13), and the lower fiber-reinforced resin layer (14) overlap.

7. The battery protection bottom plate (1) according to claim 5 or 6, wherein the upper fiber-reinforced resin layer (11), the fiber-reinforced resin frame (13), and the lower fiber-reinforced resin layer (14) each are independently selected from a glass fiber-reinforced polyamide resin member, a glass fiber-reinforced polypropylene resin member, a glass fiber-reinforced polyethylene resin member, a glass fiber-reinforced polycarbonate resin member, or a glass fiber-reinforced polystyrene resin member.

8. The battery protection bottom plate (1) according to any one of claims 5 to 7, wherein the upper fiber-reinforced resin layer (11) comprises a plurality of layers of first fiber-reinforced prepregs (110) stacked on each other;

the fiber-reinforced resin frame (13) comprises a plurality of layers of second fiber-reinforced prepregs stacked on each other; and
the lower fiber-reinforced resin layer (14) comprises a plurality of layers of third fiber-reinforced prepregs stacked on each other.

9. The battery protection bottom plate (1) according to any one of claims 1 to 8, wherein a thickness of the metal plate (12) ranges from 0.7 mm to 1.5 mm.

10. The battery protection bottom plate (1) according to any one of claims 1 to 9, wherein the metal plate (12) is a steel plate, and an outer surface of the steel plate is provided with a zinc layer, a zinc-iron alloy layer, or an electrophoretic paint protective layer.

11. A composite protection structure (10) for a battery pack, comprising a battery pack (3) and the battery protection bottom plate (1) according to any one of claims 1 to 10, the battery protection bottom plate (1) being arranged below the battery pack (3), and a buffer region (4) being formed between the battery pack (3) and the battery protection bottom plate (1).

12. The composite protection structure (10) for a battery pack according to claim 11, wherein the buffer region (4) is filled with a buffer layer (2), and the buffer layer (2) is selected from a honeycomb material or a rigid foam material.

13. A vehicle (100), comprising the battery protection bottom plate (1) according to any one of claims 1 to 10, or comprising the composite protection structure (10) for a battery pack according to claim 11 or 12.

1

11

12

13

14

FIG. 1

111

110

111

110

111

111

FIG. 2

112

112

112

112

FIG. 3

10

3

1

2

A

FIG. 4

FIG. 5

FIG. 6

FIG. 7

31

1

4

FIG. 8

100

10

FIG. 9

# INTERNATIONAL SEARCH REPORT

| International application No. |
|---|
| **PCT/CN2023/096806** |

### A. CLASSIFICATION OF SUBJECT MATTER

H01M50/244(2021.01)i; H01M50/242(2021.01)i; H01M50/231(2021.01)i; H01M50/218(2021.01)i; H01M50/249(2021.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 车, 电池, 防护, 板, 层, 金属, 纤维增强, 树脂, 玻璃钢, 玻璃纤维, 缓冲, 发泡, 蜂窝, car, battery, protect+, plate, layer, metal, resin, fiberglass, FRP, buffer, cushion, foam+

### C. DOCUMENTS CONSIDERED TO BE RELEVANT

| Category* | Citation of document, with indication, where appropriate, of the relevant passages | Relevant to claim No. |
|---|---|---|
| PX | CN 217788632 U (BYD CO., LTD.) 11 November 2022 (2022-11-11)<br>claims 1-13 | 1-13 |
| X | CN 215451600 U (BYD CO., LTD.) 07 January 2022 (2022-01-07)<br>description, paragraphs 5-38, and figures 1-5 | 1-13 |
| A | JP 2009172950 A (MITSUBISHI ELECTRIC CORP.) 06 August 2009 (2009-08-06)<br>entire document | 1-13 |
| A | KR 20210027569 A (TORAY ADVANCED MATERIALS KOREA INC.) 11 March 2021 (2021-03-11)<br>entire document | 1-13 |
| A | KR 20190057665 A (LG HAUSYS, LTD.) 29 May 2019 (2019-05-29)<br>entire document | 1-13 |
| A | WO 2017204558 A1 (LG HAUSYS, LTD.) 30 November 2017 (2017-11-30)<br>entire document | 1-13 |

☐ Further documents are listed in the continuation of Box C.     ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096806**

| Patent document cited in search report | | | Publication date (day/month/year) | Patent family member(s) | | | Publication date (day/month/year) |
|---|---|---|---|---|---|---|---|
| CN | 217788632 | U | 11 November 2022 | None | | | |
| CN | 215451600 | U | 07 January 2022 | None | | | |
| JP | 2009172950 | A | 06 August 2009 | JP | 4974916 | B2 | 11 July 2012 |
| KR | 20210027569 | A | 11 March 2021 | KR | 102394478 | B1 | 04 May 2022 |
| KR | 20190057665 | A | 29 May 2019 | KR | 102217436 | B1 | 18 February 2021 |
| WO | 2017204558 | A1 | 30 November 2017 | KR | 20170133540 | A | 06 December 2017 |
| | | | | KR | 101923381 | B1 | 30 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202221380910